Europäisches Patentamt

European Patent Office

Office européen des brevets

(11) Publication number: **0 133 509 B1**

(12) **EUROPEAN PATENT SPECIFICATION**

(45) Date of publication of patent specification: **09.10.91**  (51) Int. Cl.⁵: **C04B 35/64**, C04B 35/00

(21) Application number: **84108712.5**

(22) Date of filing: **24.07.84**

(54) Methods for predicting and controlling the shrinkage of aluminaceramic articles during sintering.

(30) Priority: **08.08.83 US 521463**

(43) Date of publication of application:
**27.02.85 Bulletin 85/09**

(45) Publication of the grant of the patent:
**09.10.91 Bulletin 91/41**

(84) Designated Contracting States:
**DE FR GB**

(56) References cited:
**US-A- 3 880 971**

**Singer, Industrial Ceramics, 1979, pages 320,
321, 770, 771**

**Searle, The Chemistry & Physics of Clays,
1924, pages 285, 286.**

(73) Proprietor: **International Business Machines
Corporation
Old Orchard Road
Armonk, N.Y. 10504(US)**

(72) Inventor: **Hamilton, Kenneth John
6567 Boston Post Court
San Jose California, 95120(US)**
Inventor: **Powell, Jimmie Lee
33 Tor Road
Wappingers Falls New York, 12590(US)**

(74) Representative: **Kreidler, Eva-Maria, Dr. rer.
nat.
Schönaicher Strasse 220
W-7030 Böblingen(DE)**

## Description

The present invention relates to a method of formulating a slurry for the fabrication of alumina ceramic articles which slurry leads to a predetermined firing shrinkage of the ceramic material. A relatively recent innovation in electronic packaging has been the development of the multilayer ceramic (hereinafter MLC) module. In this technology "green" sheets of ceramic powder held together by a temporary organic binder are metallized with a noble or refractory metal, usually, but not mandatorily, by screen printing. The metallized sheets are stacked, laminated and fired to form a monolithic ceramic-metal package. Details on MLC technology are given in SOLID STATE TECHNOLOGY, May 1972, Vol. 15, No. 5, pages 35-40, Kaiser et al: "A Fabrication Technique for Multilayer Ceramic Modules".

U.S. Patent No. 4,052,538 discloses a method of forming sintered sodium beta-alumina articles by forming an aqueous acidic colloidal solution (sol) of a dispersable alpha-alumina monohydrate, adding an aqueous solution of an inorganic oxygen-containing sodium salt to the sol to form a thixotropic gel, spray drying to form a free flowing powder, pressing into an article, heating to drive off volatile material and then sintering to form a densified sodium beta-alumina structure.

U.S. Patent No. 4,265,669 discloses a hard, strong ceramic body, a ceramic raw batch and a method for manufacture. The body, after being formed of the raw batch, can be fired to a monolithic structure without any shrinkage or distortion during the firing operation. The raw batch contains aluminum oxide, magnesium oxide, glass frit and a silicone resin.

U.S. Patent No. 4,316,965 discloses low expansion ceramics and methods of producing the same. These ceramics comprise defined proportions of $MgO$, $Al_2O_3$, $TiO_2$, $SiO_2$ and $Fe_2O_3$. The major component of the crystalline phase is a solid solution of magnesium oxide-aluminum oxide-titanium dioxide-silicon oxide-iron oxide. The method comprises preparing a batch, plasticizing the batch if necessary, shaping, drying and firing at a defined temperature. The resulting products have a honeycomb structure.

U.S. Patent No. 3,880,971 discloses a method for measuring the optical density of ceramic sheets prior to firing. The respective data can be used as a basis for controlling the degree of shrinkage of said ceramic sheets upon firing. The green unfired high alumina ceramic material has an alumina content of at least 95, preferably of 99 wt%.

Singer, "Industrial Ceramics", 1979, pages 320, 21 states that the pH of clay varies with the clay-to-water ratio and the length of time the clay has been in contact with water. Pages 770, 71 indicate that casting control is of great importance. It is also indicated that clays should be tested with respect to amount and nature of soluble salts, and, in the case of an abnormality of the casting slip, a great number of tests are proposed, including inter alia a shrinkage test. Searle, "The Chemistry and Physics of Clays", 1924, pages 285, 86 mentions that the proportion of water in a slip influences the shrinkage of the resulting ware.

None of the prior art citations mentioned herein anticipates nor suggests the method of the present invention which allows a tight shrinkage control of $Al_2O_3$ slurries or $Al_2O_3$-containing green sheets which are to form an MLC upon sintering of a stack.

According to the present invention the fired shrinkage of $Al_2O_3$ can be predicted by measuring the ionic impurity concentration thereof.

If the ionic impurity concentration is such as to provide unacceptable shrinkage of $Al_2O_3$, an ionic doping material can be added thereto to appropriately control the shrinkage during firing.

It is an object of the present invention to provide a method of formulating a slurry for the fabrication of alumina ceramic articles with predetermined fired shrinkage and of controlling the shrinkage of the ceramic oxide, the ceramic oxide-containing green sheet, or a stack of ceramic oxide-containing green sheets during sintering by adding appropriately controlled amounts of an ionic dopant thereto.

The object of the invention is achieved by the method of claim 1.

Fig. 1    is a plot of electrophoretic mobility ($10^{-7}cm^2$ $Volt^{-1}$ $Sec^{-1}$) vs. % (X-Y) green sheet shrinkage upon firing for the system of Example 1.

Fig. 2    is a plot of zeta potential (volt) vs. % (X-Y) green sheet shrinkage upon firing for the system of Example 1.

Fig. 3    is a plot of slurry resistivity ($K\Omega$-cm) vs. % (X-Y) green sheet shrinkage upon firing for the system of Example 2.

Fig. 4    is a plot of impurity concentration (ppm) vs. % (X-Y) green sheet shrinkage upon firing.

Fig. 5    is a plot of impurity concentration (ppm) vs. slurry resistivity ($K\Omega$-cm).

Fig. 6    is a plot of NaOH concentration (ppm) vs. % (X-Y) green sheet shrinkage upon firing for the system of Example 3.

Fig. 7    is a plot of slurry viscosity (Pa•s) vs. NaOH concentration (ppm).

Fig. 8    is a plot of green sheet density ($gm/cm^3$) vs. NaOH concentration (ppm).

Prior to turning to the methods of predicting and controlling shrinkage of alumina ceramic articles during sintering thereof, Applicants initially discuss background aspects of the present invention. It is to be understood that the background aspects of the present invention represent conventional prior art and it is the method of predicting and controlling shrinkage of $Al_2O_3$ during sintering which is novel for the present invention. Accordingly, these background aspects of the present invention are not to be construed as limitative.

The ceramic oxide selected for use in the present invention is not unduly limited and can be freely selected from $Al_2O_3$ materials as have been used in the prior art to yield a dense structure upon sintering, typically in green sheet form. The present invention is of application to any of such materials which show varying ionic impurity characteristics which affect shrinkage during sintering.

Most typically, however, the aluminium oxide will be $\alpha$-alumina ($Al_2O_3$) as is conventionally used in the art, and most generally the same is used in combination with small proportions of a silicate frit, generally a combination of calcium, magnesium and aluminum silicate in proportions up to about 10 wt. % of the total of the $Al_2O_3$ and silicate frit. Since the proportion of frit particles is typically very small, almost always on the order of 10 wt. % based on the $Al_2O_3$ particles or less, their effect on the method of the present invention is not overly important and, for practical purposes, the effect of frit particles, where present, can be ignored. The frit particles have a particle size as conventionally used in the art, which is essentially the same as the $Al_2O_3$ particles.

The size of the $Al_2O_3$ particles used for the present invention is not overly important and is selected from those sizes as are conventionally used in the art. Typically, this is on the order of from about 2 $\mu$m to about 8 $\mu$m, but this size range can be freely adjusted by conventional procedures such as ball or vibro-milling, if desired or necessary.

While the present invention can be used to predict and control the shrinkage of $Al_2O_3$ during sintering in general, the present invention does find particular application in predicting and controlling the shrinkage of $Al_2O_3$ containing green sheets during sintering, most especially stacked $Al_2O_3$ containing green sheets which are to form an MLC as described in SOLID STATE TECHNOLOGY, earlier mentioned, and hereafter the following discussion will be in the context of $Al_2O_3$ containing green sheets.

As is well known in the art, $Al_2O_3$ green sheets are formed of $Al_2O_3$ in combination with a polymeric binder as mandatory components. The polymeric binders used can be freely selected from those used in the prior art.

The primary characteristics which the polymeric binder exhibits is that it be thermoplastic (softened at elevated temperatures), be flexible (typically it contains a plasticizer), be soluble in the volatile solvents typically used to cast the same onto a support for green sheet formation, and that it can be sintered off without leaving any substantial amount of residue during the green sheet sintering cycle.

Typical polymeric binders as are used in the art include acetals such as polyvinyl butyral, often with dioctyl phthalate or dibutyl phthalate as a plasticizer, polysaccharides such as guar gum, typically with glycerol as a plasticizer, polyamides, polyvinyl alcohols, polyacetates, polyvinyl chloride, etc.

Currently preferred polymeric binders are later discussed.

As will be appreciate by one skilled in the art, conventional additives as are used to form ceramic oxide containing green sheets can be used in accordance with the present invention.

The slurry which is utilized to form a ceramic oxide-containing green sheet (hereafter often merely "green sheet") is typically formed using a solvent(s). The solvent(s) may be freely selected from those as are conventionally used in the prior art with the caveat that the same should be in relatively pure form or should preferably contain a known amount of known impurities. If desired, a mixture of different solvents boiling in the range of about 60°C to 160°C may be used. Useful solvents include aliphatic alcohols, ketones, aromatic solvents, compatible mixtures thereof, etc., for example, methanol, cyclohexanone, toluene, etc. A currently preferred solvent system is later described.

The slurry which is utilized to form the green sheet of the present invention contains proportions of the desired components as are conventional in the art.

While by no means limitative, typically such a slurry will comprise from about 55 to about 70 wt. % $Al_2O_3$ particles, from about 5 to about 8 wt. % polymeric binder and from about 25 to about 40 wt. % solvent(s), basis being slurry weight.

The aluminium oxides which have been subjected to the methods of the present invention are used to form a green sheet in a conventional manner. Reference should be made to SOLID STATE TECHNOLOGY, and to U.S. Patent No. 4,237,606.

Having thus described background prior art regarding the present invention, Applicants turned to the methods of the present invention in detail.

In many applications where green sheets are fired the fired shrinkage of the green sheets must be

3

controlled, but this is particularly important in MLC manufacture where extremely tight control is necessary, e.g., 17.2 ± Ca. 0.3 %. Most preferred degrees of (X-Y) % shrinkage are 16.86 to 17.54 %. The $Al_2O_3$ that is typically used to produce such an MLC is most commonly manufactured by digesting bauxite ore with non-reagent grade sodium hydroxide and removing insoluble impurities by filtration, whereafter the $Al_2O_3$ is produced by calcining monoclinic alumina trihydrate from the standard Bayer process in a rotary kiln. Since the bauxite ore comes from varying sources, typically the resulting $Al_2O_3$ as received from the manufacturer contains varying amounts of impurities from lot to lot, e.g., $Na_2O$, CaO, BaO, MgO, etc., most especially $Na_2O$. The impurities can be leached from the $Al_2O_3$, potentially along with any impurities present in the polymeric binder, by the solvent.

While our data indicate ionic impurities can also be introduced from the binder, solvent and frit used, our resistivity and chemical analysis data indicate that ionic impurity contamination appears to be fairly consistent from lot to lot, and, accordingly, ionic impurities introduced from these constituents do not appear to be an overly important variable in effecting shrinkage upon green sheet firing.

We have found that varying amounts of impurities greatly affect the degree of shrinkage of the green sheet during sintering, which is typically at a temperature within the range of about 1350 to about 1650°C for about 16 to about 24 hours (at peak temperature for about 1 hour) in an atmosphere such as wet hydrogen. For example, a high level of ionic impurities leads to a high shrinkage whereas a low level of ionic impurities leads to lower shrinkage.

We have found that ionic impurity concentration measurements provide a high correlation with green sheet shrinkage during sintering and that by conducting such ionic impurity measurements prior to sintering, the degree of shrinkage can be accurately predicted.

In addition, since the ionic impurity concentration controls shrinkage during firing, we have found that $Al_2O_3$ which exhibits too low a shrinkage during sintering can be modified to exhibit the desired degree of shrinkage by adding an appropriate amount of an ionic doping material. For example, the level of ionic impurities in "undoped" $Al_2O_3$ is determined by one of the methods discussed herein and then an appropriate amount of NaOH is added to the slurry during slurry dispersion to bring the charge density or ionic impurity concentration level to the desired level.

If desired, the NaOH can be dissolved in a small amount of the polymeric binder or methanol and added to the slurry, insuring, of course, adequate mixing.

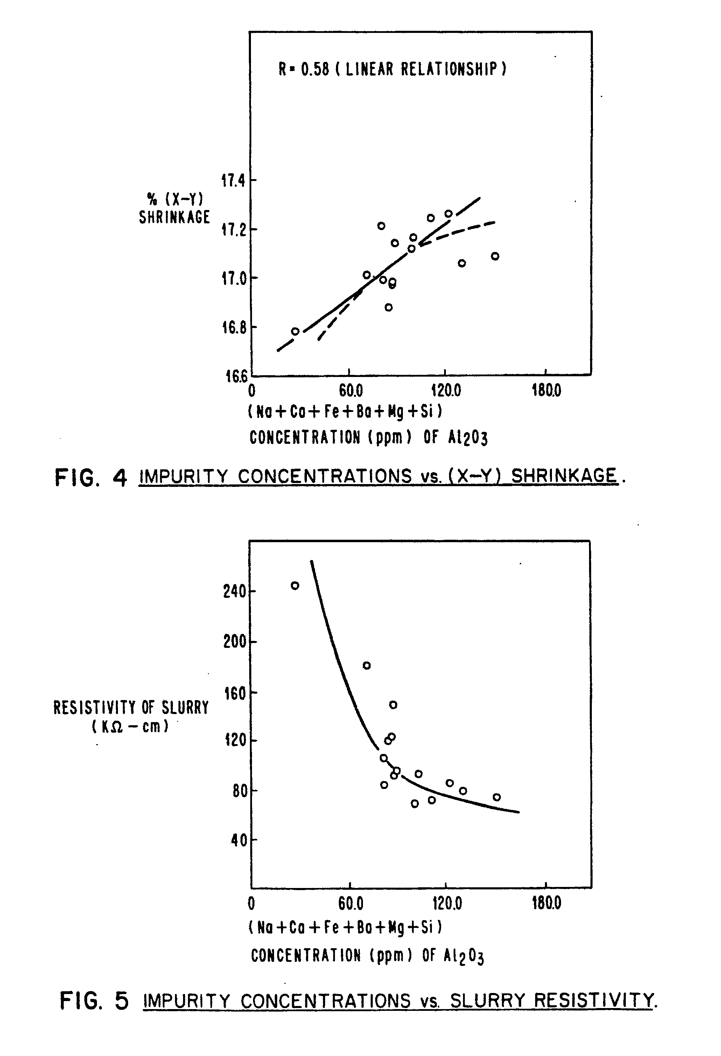

To illustrate the effect of ionic impurity concentration on % X-Y shrinkage during sintering and upon resistivity, Figs. 4 and 5 present, respectively, a plot of ionic impurity concentration (ppm) vs. % (X-Y) shrinkage upon firing and slurry resistivity (KΩ-cm).

Ionic impurity concentration measurements can be made by various conventional techniques as will now be described.

Since the present invention finds particular application with an $Al_2O_3$/frit/polymeric binder/solvent slurry, the following discussion will be in the context of such a slurry.

In addition, for purposes of more specifically illustrating the present invention and to provide a reference point so that all data are with reference to the same general type of slurry, the following more detailed discussion and examples will be with reference to a slurry composed of 58.56 % α-$Al_2O_3$, 7.24 % of a frit of calcium, magnesium and aluminum silicates, and 34.2 % of an organic phase comprising dipropylene glycol dibenzolate, a commercially available polymeric binder Butvar (B-98) which is a polyvinyl butyral resin comprising approximately 80 mol % polyvinyl acetal, 18 to 20 mol % polyvinyl alcohol and 0 to 2.5 mol % polyvinyl acetate, and methanol, all organics being present in conventional amounts as earlier indicated. The ionic impurity concentration of such a slurry can be conducted by conventional techniques such as chemical analysis, resistivity measurements or other techniques as will now be discussed.

Such ionic impurity concentrations can be determined using conventional apparatus. In the following discussion an Electrophoretic Mass Transport Analyzer (Model 1202) equipped with an ohm meter receptacle, manufactured by Micromeritics Instrument Corporation, Norcross, Georgia, was used. It was equipped with a standard platinum conductivity/resistivity cell manufactured by Beckmann, Inc. The cell consisted of two platinum electrodes encased in a glass cylinder with two ends of the electrodes exposed for making contact with the slurry to be analyzed. The other end of the cell had an electrical receptacle for attachment to the Mass Transport Analyzer.

Initially the cell constant was determined using a standard KCl solution (0.01 N) using the following equation to calculate the cell constant.

$$K_c = (R_c)(\lambda_{KCl}) = (ohm)(ohm^{-1} - cm^{-1}) = cm^{-1}$$

where

$R_c$ = measured resistance of KCl solution.

$\lambda_{KCl}$ = specific conductance from the literature.

Thus, the resistance of the slurry divided by the cell constant for a particular temperature is the slurry resistivity, i.e.:

$$\text{Slurry resistivity} = \frac{\text{Resistance (ohms)}}{\text{Cell Constant (cm}^{-1})} = \text{ohm-cm}$$

The resistance and subsequent resistivity of each slurry sample was determined at room temperature and immediately afterward the particle mobility of the slurry sample was measured using the Mass Transport Analyzer; the results were used to calculate the electrophoretic mobility and zeta potential of the samples using the following equations:

$$A) \quad \phi = \frac{(\text{wt. fraction dispersed solids}/\rho_p}{(\text{wt. fract. dispersed solids}/\rho_p) + (\text{wt. fract. liquids}/\rho_l)}$$

where,

$\rho_D$ = Density of $\alpha$-Al$_2$O$_3$/frit mixture

$\rho_l$ = Density of total organic system

$\phi$ = Volume fraction of solids

$$B) \quad V_\epsilon = \frac{(\Delta W)\ (K_c)}{(R_c)\ (\tau)\ (I)\ (\phi)\ (1-\phi)\ (\rho_p - \rho_l)} = 10^{-7}\ \text{cm}^2\ \text{sec}^{-1}\ \text{volt}^{-1}$$

where,

$\Delta W$ = Weight change in sample cell (Teflon material)

$\tau$ = Time of test

$I$ = Current

$R_c$ = Resistance of slurry sample

$K_c$ = Conductivity cell constant

$V_\epsilon$ = Electrophoretic mobility

$$C) \quad \xi = (-)\ \frac{(36 \times 10^4)\ (\pi)\ (V_\epsilon)\ (\eta)}{D} = \text{volt}$$

where,

$\eta$ = Viscosity of total organic system

$D$ = Dielectric constant of total organic system

$\xi$ = Zeta potential

The dielectric constant, D, of the total organic system was determined from the individual dielectric constants of the ingredients which make up the organic system. Such are typically available in the literature or may be determined in a conventional fashion. The following logarithmic-mixture rule equation for solvent mixtures was used to calculate the dielectric constant of the organic system at room temperature.

$$D) \quad \text{Log } D = \sum_i V_i\ \text{Log } D_i - \text{Dimensionless}$$

where,

$V_i$ = Volume fraction of phase i

$D_i$ = Dielectric constant of phase i

By any of the above procedures, the ionic impurity concentration of slurries containing $Al_2O_3$ from different lots can be determined and a plot generated which correlates ionic impurity concentration with shrinkage of the corresponding green sheet during firing, as will later be exemplified in detail.

As will be apparent from the above discussion, certain slurries formed using $Al_2O_3$ with a very low impurity content will show very low shrinkage. In accordance with another embodiment of the present invention, the slurry is doped with an ionic electrolyte to increase the ionic impurity concentration. With this known increased ionic impurity concentration, with the graphical data as earlier mentioned one can predict the degree of shrinkage during sintering for the modified slurry.

As one skilled in the art will appreciate, the ionic electrolyte will most typically be based upon one of the cationic constituents of the impurities as are present in the $Al_2O_3$, most typically Na, Ca, Ba, Mg, etc., but since Na appears to be the ionic impurity which exhibits the greatest effect on slurry shrinkage during sintering, most typically the ionic electrolyte used will be NaOH.

Since most typically ionic impurities as are present in $Al_2O_3$ are present in an amount on the order of about 0.06 ppm (parts per million)to about 130 ppm, usually any ionic electrolyte will be added in an amount sufficient to bring the total concentration of ionic impurities in the slurry to this range, though this is not limitative so long as shrinkage requirements are met.

As will be appreciated by one skilled in the art, the method of the present invention can also be used to screen unacceptable lots of alumina from acceptable lots of alumina. For such analysis typically a "model" slurry is merely formed by blending all components for about 15 minutes, permitting bubbles or froth in the slurry to break, allowing the slurry to come to room temperature and then generally performing the above zeta potential or resistivity measurement, most preferably the resistivity measurement, to thereby obtain the predicted shrinkage upon sintering.

Having thus generally described the present invention, the following working examples are offered to illustrate the same with reference to the Figures.

## Example 1

This example illustrates the determination of zeta potential to permit one to predict the shrinkage of a green sheet upon sintering. Slurry proportions were as earlier given. The slurry was simply formed by mixing all ingredients and then ball milling the same in a conventional manner for 16 hours to an average particle size of about 3 microns ($\mu$m).

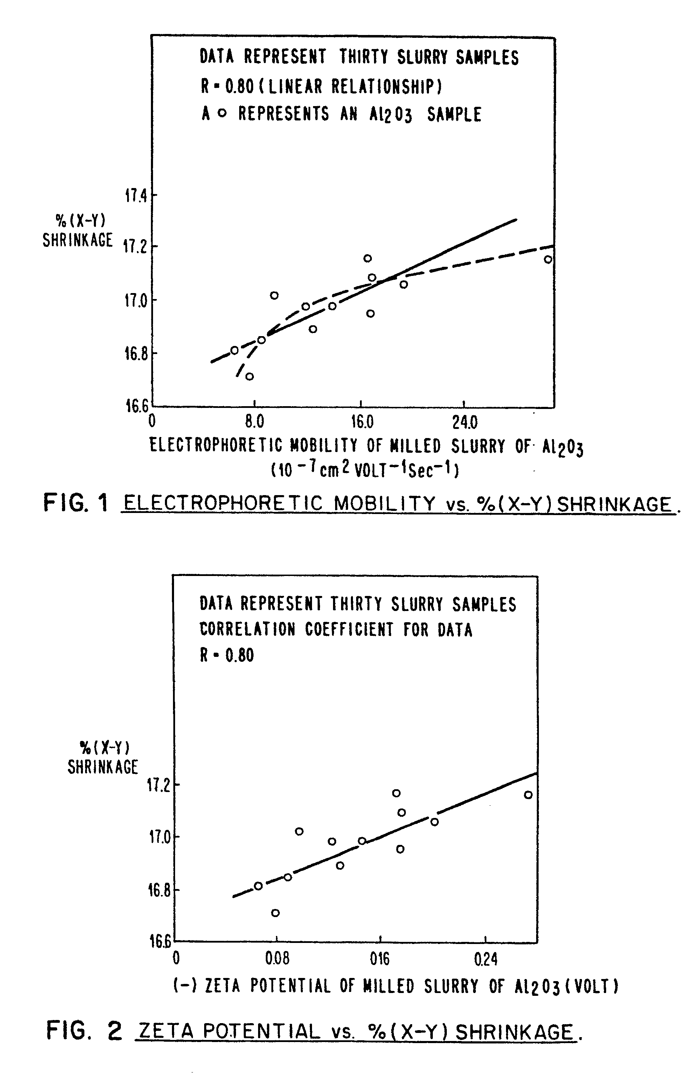

Thereafter, electrophoretic mobility and zeta potential measurements were conducted using the Electrophoretic Mass Transport Analyzer as earlier explained. The determined electrophoretic mobility of the slurry vs. % (X-Y) shrinkage upon green sheet sintering is shown in Fig. 1.

As can be seen, as the electrophoretic mobility and the zeta potential of the $Al_2O_3$ and frit particles in the slurry increase, the shrinkage of a corresponding substrate increased.

The results obtained upon analyzing 30 slurries are given in Fig. 2. In Fig. 2, a less negative zeta potential for the milled slurry (volts) represents a lower ionic impurity concentration whereas a more negative zeta potential of the milled slurry (volts) represents a higher ionic impurity concentration. As can easily be seen, zeta potential, and accordingly ionic impurity concentration, correlate very well with green sheet shrinkage upon sintering.

The actual analysis procedure involved simply taking a small sample of the well-milled slurry (about 150 $cm^3$), de-airing, redispersing, permitting the same to reach room temperature and then determining electrophoretic particle mobility using the Electrophoretic Mass Transport Analyzer (ensuring no bubbles were on the electrodes) and from these results calculating the charge density or zeta potential of the slurry particles in terms of volts using the earlier provided equations.

The conductivity cell should be cleaned after use in an appropriate solvent such as methyl alcohol until residual slurry has been removed and then blown dry with dry nitrogen.

In all instances following green sheet formation the green sheet was sintered at a temperature of 1350 to 1650° C for 24 hours and was at peak temperature for about 1 hour in a wet hydrogen atmosphere at one atmosphere in a conventional fashion. Unless otherwise indicated, percent shrinkage was determined in the following examples at the same conditions.

As can also be seen, the correlation coefficient (R factor) shows that the relationships between electrophoretic mobility and zeta potential and shrinkage are quite good.

Example 2

This example illustrates the use of slurry resistivity measurements to predict the shrinkage of a green sheet upon sintering.

We have found that slurry resistivity measurements are a more accurate indication of shrinkage than other measurements as we believe slurry resistivity measurements to be a more accurate measure of the total electrical contribution of the ionic constituents in the slurry. Further, slurry resistivity measurements are quite easy to make.

The slurries used in this example were formed as described for Example 1.

Slurry resistivity measurements were performed as follows.

Using the Electrophoretic Mass Transport Analyzer earlier described, slurry samples were de-aired, each sample being approximately 150 $cm^3$ in volume. The samples were allowed to cool to room temperature and redispersed by shaking for several minutes before measuring resistivity. Slurry sample resistivity was obtained by immersing the conductivity/resistivity cell about an inch into the slurry, ensuring that both platinum electrodes were completely submerged in the slurry, and then the cell was agitated back and forth in the slurry to remove trapped air bubbles from the electrodes which would affect resistivity values.

Resistivity measurement was then conducted by rotating a resistant potentiometer in the proper direction until a balance was approached, as indicated by minimum deflection on the ammeter. At this point the resistance of the slurry sample is given, and its resistivity is calculated by dividing slurry resistance by the conductivity cell constant in accordance with the earlier provided formula.

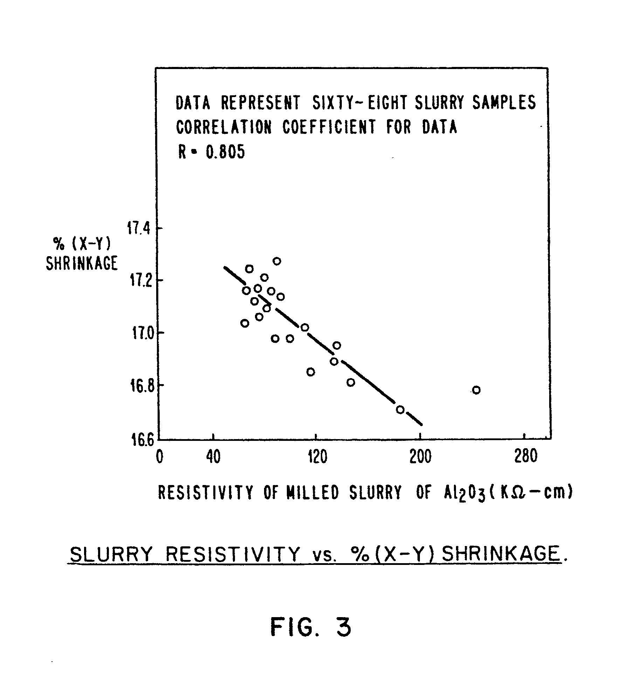

The results obtained are shown in Fig. 3. As is easily seen there is an excellent correlation between resistivity and green sheet shrinkage on sintering, i.e., there is an excellent correlation between ionic impurity concentration and green sheet shrinkage upon sintering.

The R factor exhibited by Fig. 3 is seen to be exceptionally good, confirming our view that slurry resistivity measurements show a better correlation with shrinkage than other measurements.

Following essentially the same procedure as above, Sample 101, which had a high Na level of 104 ppm (parts per million), gave a high shrinkage of 17.2 %, whereas a Sample 82, which had a low level of Na of 22 ppm, gave a low shrinkage of 16.78 %, Na levels being confirmed by inductively coupled argon plasma spectroscopy. There were virtually no differences between the surface areas of the two $Al_2O_3$ samples used to form the slurries, viz: Sample 101: 0.976 $m^2/g$; Sample 82: 0.932 $m^2/g$. Additional slurries were formed following the above procedure. Sample 16, which was very similar to Sample 82, exhibited a slurry resistivity of 186 KΩ-cm as compared with a slurry resistivity of 88 KΩ-cm using Sample 98, which was very similar to Sample 101. The zeta potentials of the two slurries were -0.08 volt and -0.28 volt, respectively. Sample 16 yielded a shrinkage of 16.76 % whereas Sample 98 yielded a shrinkage of 17.20 %.

Resistivity, surface area values for $Al_2O_3$, percent shrinkage of the green sheet upon firing and sodium content for two of the above Samples and other Samples were determined and are given below. Within experimental error, the excellent correlation between sodium content and percent shrinkage on firing is easily seen.

## TABLE

## Resistivity and Surface Area Comparison
## With % Shrinkage For $Al_2O_3$ Slurries

| Sample No. | Resistivity ($K\Omega$-cm) | Surface Area $m^2/gm$ | % Shrinkage | Sodium Content (p.p.m.) |
|---|---|---|---|---|
| 82 | 198 | 0.9319 | 16.78 | 22.3 |
| 123 | 170 | 0.9636 | 16.80 | 44.6 |
| 110 | 159 | 0.9827 | 16.85 | 55.1 |
| 116 | 125 | 0.9717 | 17.01 | 39.4 |
| 109 | 121 | 0.9612 | 16.99 | 52.1 |
| 128 | 120 | 0.9643 | 17.02 | 45.2 |
| 145 | 120 | 0.9741 | 17.14 | 63.0 |
| 209 | 116 | 0.8781 | 16.96 | 71.4 |
| 92 | 108 | 0.9576 | 16.98 | 65.7 |
| 150 | 93.6 | 1.0039 | 17.32 | 81.5 |
| 101 | 85.0 | 0.9762 | 17.26 | 103.7 |
| 185 | 84.0 | 0.9058 | 17.23 | 101.6 |
| 130 | 83.9 | 0.9916 | 17.03 | 42.9 |
| 176 | 79.0 | 0.9344 | 17.06 | - |
| 103 | 71.0 | 0.9862 | 17.24 | 88.3 |
| 134 | 69.4 | 0.9891 | 17.16 | 76.8 |

Example 3

This Example illustrates the ionio electrolyte doping procedure of the present invention which enables one to achieve good green sheet density and shrinkage results.

In each instance, the slurry was formed as above described and sintering was conducted at the earlier indicated conditions. The $Al_2O_3$ was the same as that used in Sample 82.

Four different doping concentrations were used: 6, 18, 60 and 180 ppm of 98 % reagent grade NaOH. Doping was performed by simply pouring dry powdered NaOH into the ball mill during the ball milling cycle.

In this instance, the milling cycle was 6.5 hours for frit milling, whereafter the $Al_2O_3$ was added and milling was conducted for a further ten hours. After de-airing the resulting slurry, slurry samples were taken for zeta potential resistivity measurements.

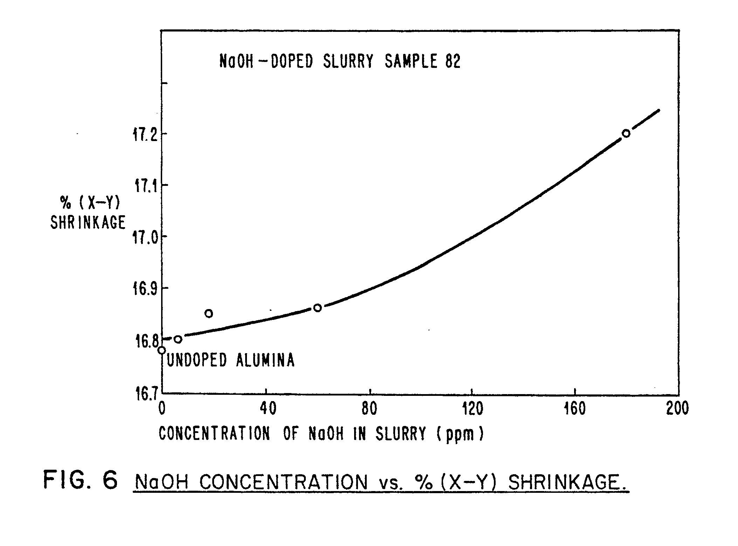

The results obtained are presented in Fig. 6 where the amount of added NaOH is plotted against % (X-Y) shrinkage. It is easily seen that increasing amounts of NaOH increase shrinkage, permitting shrinkage to be controlled in a highly accurate fashion.

Several other interesting effects were noted with respect to the doping procedure of Example 3.

With increasing amounts of NaOH, a general trend was noted that slurry viscosity increased, whereas a general trend was noted that green sheet density decreased. As would be expected, the zeta potential of the slurry was found to increase with increasing concentrations of NaOH, reflected by increased % (X-Y) shrinkage. Finally, as would be expected, slurry resistivity was found to generally increase with increasing amounts of NaOH, with a corresponding decrease in % (X-Y) shrinkage.

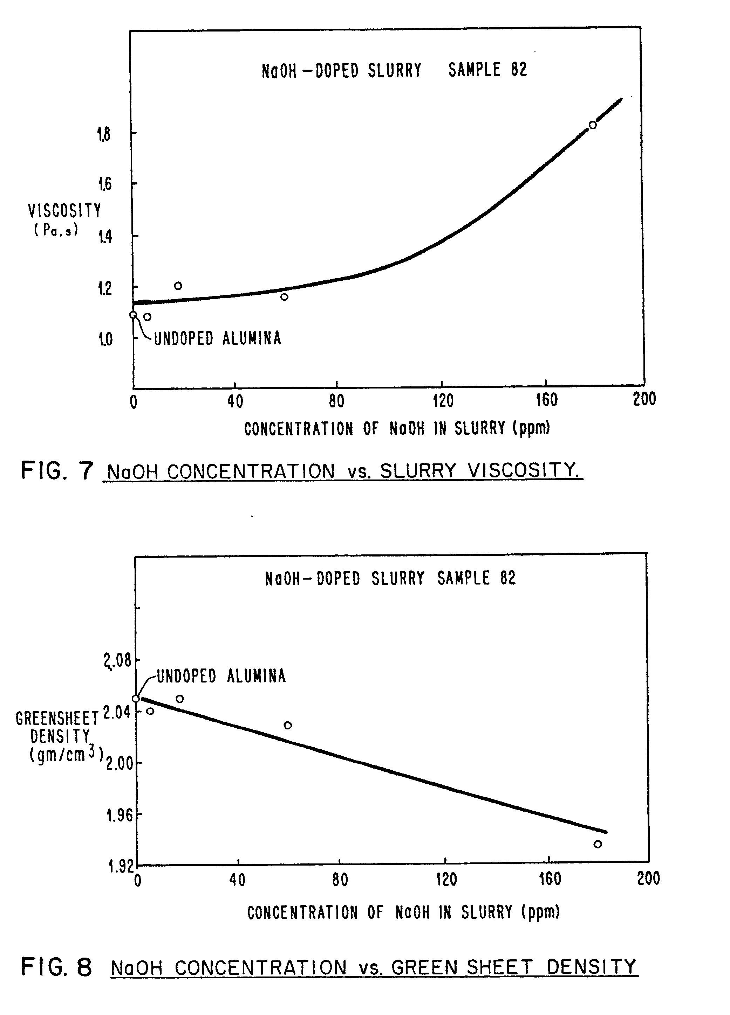

In fact, slurry viscosity is virtually directly proportional to the NaOH concentrations ranging from about 1.15 Pa•s for undoped $Al_2O_3$ to about 1.8 Pa•s at about 180 ppm NaOH, indicating that slurry viscosity can be varied or controlled at will by doping the slurry with suitable ionic electrolytes. Slurry viscosity (Pa•s) is plotted vs. NaOH concentration (ppm) for the slurry formed from Sample 82 in Fig. 7.

Our data also indicate that green sheet density is also virtually linear with respect to the NaOH concentration in the slurry (all green sheet densities are $gm/cm^3$) ranging from about 2.04 for undoped $Al_2O_3$ down to 1.96 at 180 ppm NaOH. Green sheet density ($g/cm^2$) is plotted vs. NaOH concentration for the slurry formed from Sample 82 in Fig. 8.

In all of the above instances, the $Al_2O_3$ in the slurry was the same as that given for Sample 82.

Thus, it can be seen that ionic electrolytes can be used to substantially affect green sheet density.

## Claims

1. Method of formulating a slurry for the fabrication of alumina ceramic articles which slurry leads to a predetermined firing shrinkage of the ceramic material comprising the steps of
   a) predicting the firing shrinkage of the ceramic material of the slurry by measuring of the slurry as regards ionic impurities concentration, electrical resistivity, Zeta potential or electrophoretic mobility which slurry consists essentially of alumina, a polymeric binder and an organic solvent and
   b) adding to the slurry at least one ionic dopant in an amount which when added provides a specific total ionic impurities concentration required to obtain a desired sintering shrinkage of the material produced from this slurry.

2. Method of claim 1, wherein the desired shrinkage during sintering is in the range of 17.2 ± about 0.3%.

3. Method of claim 2, wherein the dopant is added in an amount to provide a desired shrinkage of from about 16.86 to about 17.54.

4. Method of claim 1, wherein said slurry further comprises a silicate frit in an amount of up to 10 wt%, based on the total weight of $Al_2O_3$ and silicate frit.

5. Method of claim 1, wherein said ionic dopant is based upon one of the cationic constituents Na, Ca, Ba, and Mg.

6. Method of claims 1 and 5, wherein said ionic dopant is sodium hydroxide.

7. Method of claim 6, wherein sodium hydroxide is used in an amount of about 6 to about 180 ppm to provide a desired shrinkage within the range of about 16.8 to about 17.2.

8. Method of one or several of claims 1 to 7, wherein said slurry consists of about 55 to about 70 wt% $Al_2O_3$ particles, of about 5 to about 8 wt% polymeric binder, of about 25 to about 40 wt% solvent, basis being slurry weight, and no more than about 10 wt% of a silicate frit, basis being the total weight of the $Al_2O_3$ and the silicate frit.

9. Method of claim 1, wherein the fired shrinkage results from sintering at a temperature within the range of about 1350 to about 1650° C for about 16 to about 24 hours.

10. Use of the slurry formulated in accordance with one or several of the preceding claims for forming green sheets for multi-layer ceramic modules.

## Revendications

1. Procédé de formulation d'une bouillie pour la fabrication d'articles en céramique d'alumine, laquelle bouillie conduit à un retrait prédéterminé pendant la cuisson du matériau céramique, caractérisé en ce qu'il comprend les étapes suivantes :

   a) prévision du retrait à la cuisson du matériau céramique de la bouillie, par mesure de la concentration des impuretés ioniques, de la résistivité électrique, du potentiel zeta ou de la mobilité électrophorétique de la bouillie, laquelle bouillie comprend essentiellement une alumine, un liant polymère et un solvant organique, et

   b) addition à la bouillie d'au moins un dopant ionique en une quantité, qui, lorsqu'elle est ajoutée, fournit la concentration spécifique totale d'impuretés ioniques requise pour obtenir un retrait désiré au frittage du matériau produit à partir de cette bouillie.

2. Procédé suivant la revendication 1, caractérisé en ce que le retrait désiré au frittage est de l'ordre de 17,2 ± environ 0.3,%.

3. Procédé suivant la revendication 2, caractérisé en ce que le dopant est ajouté en une quantité induisant un retrait désiré d'environ 16,86 à environ 17,54%.

4. Procédé suivant la revendication 1, caractérisé en ce que cette bouillie comprend de plus, une fritte de silicate en une quantité allant jusqu'à 10% en poids par rapport au poids total de $Al_2O_3$ et de fritte de silicate.

5. Procédé suivant la revendication 1, caractérisé en ce que ce dopant ionique est à base de l'un des constituants cationiques Na, Ca, Ba et Mg.

6. Procédé suivant les revendications 1 et 5, caractérisé en ce que ce dopant ionique est l'hydroxyde de sodium.

7. Procédé suivant la revendication 6, caractérisé en ce que l'hydroxyde de sodium est utilisé en une quantité d'environ 6 à 180 ppm pour fournir un retrait désiré de l'ordre d'environ 16,8 à 17,2%.

8. Procédé suivant l'une quelconque des revendications 1 à 7, caractérisé en ce que cette bouillie comprend d'environ 55 à 70% en poids de particules d'$Al_2O_3$, d'environ 5 à 8% en poids de liant polymère, d'environ 25 à 40% en poids de solvant par rapport au poids de la bouillie, et pas plus d'environ 10% en poids d'une fritte de silicate, par rapport au poids total d'$Al_2O_3$ et de fritte de silicate.

9. Procédé suivant la revendication 1, caractérisé en ce que le retrait à la cuisson résulte d'un frittage à une température de l'ordre d'environ 1350 à 1650°C pendant d'environ 16 à 24 heures.

10. Utilisation de la bouillie formulée suivant l'une quelconque des revendications précédentes pour former des feuilles vertes pour des modules céramiques à plusieurs couches.

## Patentansprüche

1. Verfahren zur Formulierung einer Aufschlämmung für die Herstellung von Aluminiumoxid-keramischen Teilen, wobei die Aufschlämmung zu einer vorbestimmten Schrumpfung während des Erhitzens des keramischen Materials führt, welches folgende Schritte umfasst:

   a) Vorherbestimmen der Schrumpfung des keramischen Materials während des Erhitzens der Aufschlämmung durch Messen folgender Eigenschaften der Aufschlämmung: der Konzentration ionischer Verunreinigungen, des elektrischen Widerstandes, des Zeta-Potentials oder der elektrophoretischen Beweglichkeit, wobei die Aufschlämmung im wesentlichen aus Aluminiumoxid, einem polymeren Bindemittel und einem organischen Lösungsmittel besteht, und

   b) Hinzufügen wenigstens eines ionischen Dotierungsmittels zu der Aufschlämmung in einer Menge, die, wenn hinzugefügt, zu einer spezifischen Gesamtionenkonzentration führt, die für die gewünschte Sinterschrumpfung des Materials, welches aus dieser Aufschlämmung hergestellt wird, erforderlich ist.

2. Verfahren nach Anspruch 1, wobei die gewünschte schrumpfung während des Sinterns im Bereich von 17,2 ± etwa 0,3 % liegt.

3. Verfahren nach Anspruch 2, wobei das Dotierungsmittel in einer Menge zugegeben wird, damit eine gewünschte Schrumpfung von etwa 16,86 bis 17,54 erhalten wird.

4. Verfahren nach Anspruch 1, wobei besagte Aufschlämmung zusätzlich eine Silikatfritte in einer Menge bis zu 10 Gew.%, bezogen auf das Gesamtgewicht von Aluminiumoxid und Silikatfritte, enthält.

5. Verfahren nach Anspruch 1, wobei das ionische Dotierungsmittel auf einem der kationischen Bestandteile Na, Ca, Ba und Mg basiert.

6. Verfahren nach den Ansprüchen 1 und 5, wobei besagtes ionisches Dotierungsmittel Natriumhydroxid ist.

7. Verfahren nach Anspruch 6, wobei Natriumhydroxid in einer Menge von etwa 6 bis 180 ppm verwendet wird, die zu einer gewünschten Schrumpfung von etwa 16,8 bis etwa 17,2 führt.

8. Verfahren nach einem oder mehreren der Ansprüche 1 bis 7, wobei die Aufschlämmung aus etwa 55 bis 70 Gew.% $Al_2O_3$ Teilchen, aus etwa 5 bis 8 Gew.% polymerem Bindemittel, aus etwa 25 bis etwa 40 Gew.% Lösungsmittel, bezogen auf das Gewicht der Aufschlämmung, und nicht mehr als etwa 10 Gew.% einer Silikatfritte, bezogen auf das Gesamtgewicht von $Al_2O_3$ und der Silikatfritte, besteht.

9. Verfahren nach Anspruch 1, wobei die Schrumpfung während des Sinterns aus dem Sintern bei einer Temperatur im Bereich von etwa 1350 bis etwa 1650° während etwa 16 bis 24 Stunden resultiert.

10. Verwendung der nach einem oder mehreren der vorhergehenden Ansprüche formulierten Aufschlämmung zur Herstellung 'grüner' Blätter für Mehrschicht-Keramikmodule.

FIG. 1 ELECTROPHORETIC MOBILITY vs. %(X-Y)SHRINKAGE.

FIG. 2 ZETA POTENTIAL vs. %(X-Y) SHRINKAGE.

DATA REPRESENT SIXTY-EIGHT SLURRY SAMPLES
CORRELATION COEFFICIENT FOR DATA
R = 0.805

% (X-Y) SHRINKAGE

RESISTIVITY OF MILLED SLURRY OF $Al_2O_3$ ( KΩ−cm)

SLURRY RESISTIVITY vs. % (X−Y) SHRINKAGE.

FIG. 3

FIG. 4 IMPURITY CONCENTRATIONS vs. (X−Y) SHRINKAGE.

FIG. 5 IMPURITY CONCENTRATIONS vs. SLURRY RESISTIVITY.

FIG. 6 NaOH CONCENTRATION vs. % (X−Y) SHRINKAGE.

NaOH—DOPED SLURRY    SAMPLE 82

VISCOSITY (Pa.s)

UNDOPED ALUMINA

CONCENTRATION OF NaOH IN SLURRY (ppm)

FIG. 7 NaOH CONCENTRATION vs. SLURRY VISCOSITY.

NaOH—DOPED SLURRY SAMPLE 82

UNDOPED ALUMINA

GREENSHEET DENSITY (gm/cm$^3$)

CONCENTRATION OF NaOH IN SLURRY (ppm)

FIG. 8 NaOH CONCENTRATION vs. GREEN SHEET DENSITY